(19) Europäisches Patentamt European Patent Office Office européen des brevets

(11) **EP 3 299 988 B1**

(12) **EUROPEAN PATENT SPECIFICATION**

(45) Date of publication and mention of the grant of the patent:
**10.03.2021 Bulletin 2021/10**

(51) Int Cl.:
*G06F 21/60* (2013.01)      *H04L 9/08* (2006.01)
*H04L 29/06* (2006.01)      *H04W 12/02* (2009.01)

(21) Application number: **16190077.4**

(22) Date of filing: **22.09.2016**

(54) **SECURE COMMUNICATION METHOD AND SYSTEM**

VERFAHREN UND SYSTEM FÜR SICHERE KOMMUNIKATION

PROCÉDÉ ET SYSTÈME DE COMMUNICATION SÉCURISÉE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**28.03.2018 Bulletin 2018/13**

(73) Proprietor: **MARICI Holdings The Netherlands B.V. 3068AX Rotterdam (NL)**

(72) Inventors:
• **TAZZARI, Davide**
  **52024 Loro Ciuffenna (AR) (IT)**
• **VERNIA, Filippo**
  **19121 La Spezia (SP) (IT)**
• **LAMOGLIE, Luigi**
  **52028 Terranuova Bracciolini (AR) (IT)**

(74) Representative: **Mannucci, Michele et al Ufficio Tecnico Ing.A. Mannucci S.r.l. Via della Scala 4 50123 Firenze (IT)**

(56) References cited:
EP-A1- 2 743 868       WO-A1-2016/065318
US-A1- 2010 017 596    US-A1- 2013 219 189
US-B1- 6 480 831

**Description**

FIELD OF THE INVENTION

Disclosed herein is a method for secure transmission of data between devices. Embodiments disclosed herein relate to secure data transmission between electronic devices such as a plurality of clients and a server.

BACKGROUND ART

In several applications data must be transmitted from a large number of client devices, to a server, for instance in order to make the data available via internet from a server portal to an administrator or a user. Typical applications where such data transmission needs arise include monitoring of electronic devices in the field, to acquire data concerning operation of the devices and collect them in a server. The electronic devices may be for instance control units of photovoltaic panels, wind turbines or other renewable energy resources. Data concerning operation parameters, energy produced by the devices, and the like, must be made available through a portal, which allows access to a server where the data are collected and stored.

The application of the invention disclosed herein is not limited to the field of renewable energy resources. Rather, the electronic devices may include vending machines, lighting devices and equipment, e,g. street lighting devices, traffic control devices, video cameras, intrusion detection systems and in general any device which may benefit from data connection with a remote server or other central unit.

Data of this nature are often sensible data and/or confidential data and they shall be transmitted under secure conditions. Typically a client-server data communication under secure data transmission conditions requires a preliminary step of establishing a secure transmission channel. This allows the data to be transferred under secure conditions, preventing "prying eyes" from capturing or modifying information contained in the data flow. Such transmission requires an SSL (Secure Sockets Layer) or TLS (Transport Layer Security) based transmission channel.

Establishing an SSL/TLS transmission channel starts with a negotiation process, using e.g. an asymmetric encryption key. Once a secure transmission channel has been established, a symmetric key is provided from a first device (e.g. a server) to a second device (e.g. a client), and said symmetric encryption key is used for encrypting the data to be exchanged from the second device to the first device or vice-versa. Once the transmission session has ended, the symmetric encryption key is discarded. If a new data transmission session is required, a secure transmission channel must be established anew through an SSL handshaking process.

Establishing an SSL/TLS secure transmission channel is a heavy process, from both time and data traffic viewpoint. In some situations, the data required for establishing a secure SSL/TLS communication channel exceed the actually useful data exchanged between two devices, once the secure transmission channel has been established. The process of establishing a secure transmission channel must be restarted at each new connection between the two devices, e.g. a remote unit and a server.

An SSL handshake process typically requires around 5kB per connection, which is negligible in case an ADSL connection is available, but may be a considerable amount of data traffic, when such traffic has to be paid on a data-amount basis.

If a client device requires several connections (e.g. n=10 connections) per day for a plurality of operations (k), e.g. three operations (k=3), such as data transmission, configuration and software upgrade, the amount of data transmission required just for SSL handshaking will be:

$$\text{Data amount} = n*k*5kB = 3*10*5kB = 150 \text{ kB}$$

In one month the data traffic required for SSL handshaking becomes

$$30*150 \text{ kB} = 4500 \text{ kB} = 4,5MB$$

This amount is small when compared to the data traffic we are used to when browsing in the internet. However, in the M2M (machine-to-machine) world, where only few data are transmitted and configuration and upgrade are basically only checks, where nothing is changed, this may mean that the data traffic required for SSL handshaking is much more than the actually transferred information itself. In M2M applications data are often transmitted through satellite or cellular connections, where data traffic involves high costs.

US201370219189 discloses a cryptographic transmission system wherein a plurality of nodes are each provided with a pre-loaded key encryption key (KEK), which is stored on a KEK slot. The KEK is used to decrypt symmetric encryption keys used for ciphering text in a data transmission session.

A need therefore exists for a method which allows secure data transmission, but which requires less data traffic for establishing a secure transmission channel.

SUMMARY OF THE INVENTION

In accordance with a first aspect of the invention, a method according to claim 1 is provided. In accordance with a second aspect of the invention, a system according to claim 16 is provided. Further aspects of the invention are set forth in the following description, the drawings and the dependent claims.

According to embodiments disclosed herein, in order to remove or alleviate one or more of the drawbacks of the prior art, a new method for secure data transmission between a first device, such as a server, and a second device, such as a client is provided. According to some embodiments, the method comprises the step of establishing a secure communication channel between the first device and the second device. Once the secure communication channel has been established, a set of symmetric encryption keys can be transmitted through the secure communication channel from the first device to the second device under secure transmission conditions. The symmetric encryption keys are stored in respective protected storage memory areas at the first device and at the second device, for future use.

Once these preliminary steps have been performed, when the second device is required to transmit data to the first device, the following steps are performed: one of said symmetric encryption keys at the second device is selected; a data bunch (i.e. a data package) is generated at the second device and encrypted with the selected symmetric encryption key. Once the data bunch has been encrypted, the encrypted data bunch is transmitted from the second device to the first device. The encrypted data bunch received by the first device can then be decrypted using the selected symmetric encryption key.

The method can be used for data transmission between a first device, such as a server, and a plurality of second devices. Each second device can be provided with its own set of symmetric encryption keys.

The method can be used e.g. for collecting data from electric energy sources using renewable energy, such as wind turbines, photovoltaic panels and the like, for instance. Each electric energy source or set of electric energy sources can be interfaced with a respective second device, which collects operating parameters, data or other information from the electric energy sources and transmits the collected data to a server. These data are then made available for consultation by an authorized user through the server.

The step of establishing a secure communication channel between the first device and the second device can be performed by any known process, for example based on the use of an asymmetric encryption key. For instance, an SSL or TLS process can be used. As noted above, handshaking between two devices when a secure transmission channel is to be established, is a computationally heavy process. According to the method disclosed herein, said process is not performed each time data transmission between the first device and the second device is required, for the purpose of establishing the communication channel. Rather, the process is performed once, to transmit a set of symmetric encryption keys from the first device to the second device, under secure transmission conditions. Said symmetric encryption keys are then selectively used each time data transmission from the second device to the first device is required. In this manner a new handshaking process using an asymmetric encryption key or other computationally heavy processes can be dispensed with, at least as far as the previously exchanged symmetric encryption keys are available and valid for data encryption.

To improve security of the method, each symmetric encryption key can be provided with an expiry time or date. The symmetric encryption keys are thus available for communication only for a given time interval, after which the symmetric keys become unusable. In order to prevent transmission of a data bunch or data package, which is encrypted with an invalid or expired symmetric encryption key, the step of selecting one of the stored symmetric encryption keys can in turn comprise the step of checking if the selected symmetric encryption key has expired prior to using said key for data transmission. If the selected symmetric encryption key has expired, the selected symmetric encryption key can be discarded and another symmetric encryption key can be used instead. In other embodiments, if the selected symmetric encryption key has expired, the steps of transmitting and storing a new set of symmetric encryption keys through a secure transmission channel can be performed anew. In this way, transmission of a data package encrypted with an invalid (expired) symmetric encryption key is avoided, and data traffic is saved.

According to some embodiments, the step of checking the validity of a symmetric encryption key can include the step of informing the first device about which symmetric encryption key has been selected for data encryption and waiting for a confirmation from the first device that the selected symmetric encryption key is still a valid encryption key. In this way the expiry date or time of the symmetric encryption key does not require to be included in the data transmitted from the first device to the second device when the set of encryption keys is transmitted. It is sufficient for the non-expiry of the symmetric encryption key to be checked that the first device knows the expiry date.

In other embodiments, if each symmetric encryption key is stored by the second device along with the expiry date or time thereof, a preliminary check on non-expiration of the symmetric encryption key can be performed by the second device directly.

However, performing a key-validity check at the first device also in case the symmetric encryption key is stored by the second device along with the expiry date or time thereof, can be useful, since symmetric encryption keys could be invalidated manually, e.g. by a server administrator, irrespective of their actual expiry date. This may happen when a potential security issue arises, for instance. A key invalidation procedure may be triggered at the side of the first device, e.g. a server. However this is not the only possibility. In some embodiments the option may be foreseen to invalidate the keys and/or to request a key replacement from the second device, i.e. the client device.

According to some embodiments, the second device can transmit to the first device information identifying the selected symmetric encryption key even if the symmetric encryption keys do not have an expiry time or date. This can be useful for instance if invalidation of the symmetric encryption keys is not caused by the expiration thereof, but only manually or in a random manner by the first device, for increased security.

Generally speaking, information on the selected symmetric encryption key can be sent from the second device to the first device either prior, during or after transmission of the encrypted data bunch. However, as noted above, if such information is required for a preliminary check on validity of the selected symmetric encryption key in order to avoid waste of data traffic, then said information is transmitted before transmission of the encrypted data and preferably also before encrypting the data to be transmitted, such that the encryption process is only performed when the validity of the selected symmetric encryption key has been verified.

For improved data transmission security, according to some embodiments of the method disclosed herein, the information identifying the selected symmetric encryption key does neither contain the selected symmetric encryption key itself, nor information derived from the selected symmetric encryption key, for instance the hash value or digest of the selected symmetric encryption key, obtained by applying a cryptographic has function thereto. This ensures that the selected symmetric encryption key cannot be retrieved from the data traffic exchanged between the first device and the second device in such a preliminary checking step aimed at verifying the validity of the selected symmetric encryption key.

As understood herein, a digest of a key, of a set of data, or of a message in general, is the output of a cryptographic function applied to the key, data or message.

In some embodiments, when checking the validity of the selected symmetric encryption key is required, the following steps can be foreseen. Information is transmitted from the second device to the first device, suitable for the first device to identify the symmetric encryption key selected by the second device. The first device then checks if the selected symmetric encryption key is valid and transmits to the second device either a valid-key message, if the selected symmetric encryption key is still valid, or an invalid-key message if the selected symmetric encryption key is invalid. If a valid-key message is received by the second device, the step of transmitting the encrypted data bunch is performed. Conversely, if an invalid-key message is received by the second device, the step of transmitting the encrypted data bunch is not performed.

According to some embodiments, if an invalid-key message is received, a different symmetric encryption key is selected from the set of available symmetric encryption keys and the validity of this latter selected symmetric encryption key is checked as described above. Alternatively, if an invalid-key message is received, the entire set of stored symmetric encryption keys can be discarded, e.g. erased from the storage memory of the second device, and the process of secure transmission of a fresh set of symmetric keys can be performed anew.

According to some embodiments each symmetric encryption key can be combined with a unique key identification code, which univocally identifies one of a plurality of transmitted symmetric encryption keys assigned to the second device.

In some embodiments, each symmetric encryption key is combined with a random check key, which is uncorrelated with respect to the symmetric encryption key. Said random check key is used to inform the first device about which symmetric encryption key has been selected by the second device.

If a step of transmitting information identifying the selected symmetric encryption key is provided, said step can comprise applying a cryptographic hash function to at least the random check key associated to the selected symmetric encryption key. In this way, the information identifying the selected symmetric encryption key contains the digest of the random check key.

For improved transmission security, the step of transmitting information identifying the selected symmetric encryption key can comprise the following steps:

- generating a stamp, for instance a time stamp;
- applying the cryptographic hash function to the random check key and the stamp, concatenated thereto;
- transmitting from the second device to the first device the information consisting of at least the stamp and the digest of the random check key and the stamp concatenated thereto.

Preferably, also a unique key identification code is transmitted, such that validation at the side of the first device is made faster and more efficient.

The present disclosure also concerns a system comprising at least a server and a plurality of clients, wherein the server and the clients are configured and arranged for secure communication with a method as disclosed above.

Further details and additional features of the method and system of the invention are set forth here below, reference being made to exemplary embodiments thereof.

BRIEF DESCRIPTION OF THE DRAWINGS

A more complete appreciation of the disclosed embodiments of the invention and many of the attendant advantages thereof will be readily obtained as the same becomes better understood by reference to the following detailed description when considered in connection with the accompanying drawings, wherein:

Fig.1 illustrates a system including a first device, such as a server, and a plurality of second devices, arranged and configured for communication with the first device;
Fig.2 illustrates a flow chart showing the steps of SSL handshaking an symmetric encryption key exchange;
Fig.3 illustrates a schematic of storage memories for storing symmetric encryption keys;
Figs.4 illustrates a flow chart summarizing the steps of the data encryption and transmission process in an embodiment of the method disclosed herein.

DETAILED DESCRIPTION OF EMBODIMENTS OF THE INVENTION

The following detailed description of the exemplary embodiments refers to the accompanying drawings. The same reference numbers in different drawings identify the same or similar elements. Additionally, the drawings are not necessarily drawn to scale. Also, the following detailed description does not limit the invention. Instead, the scope of the invention is defined by the appended claims.

Reference throughout the specification to "one embodiment" or "an embodiment" or "some embodiments" means that the particular feature, structure or characteristic described in connection with an embodiment is included in at least one embodiment of the subject matter disclosed. Thus, the appearance of the phrase "in one embodiment" or "in an embodiment" or "in some embodiments" in various places throughout the specification is not necessarily referring to the same embodiment(s). Further, the particular features, structures or characteristics may be combined in any suitable manner in one or more embodiments.

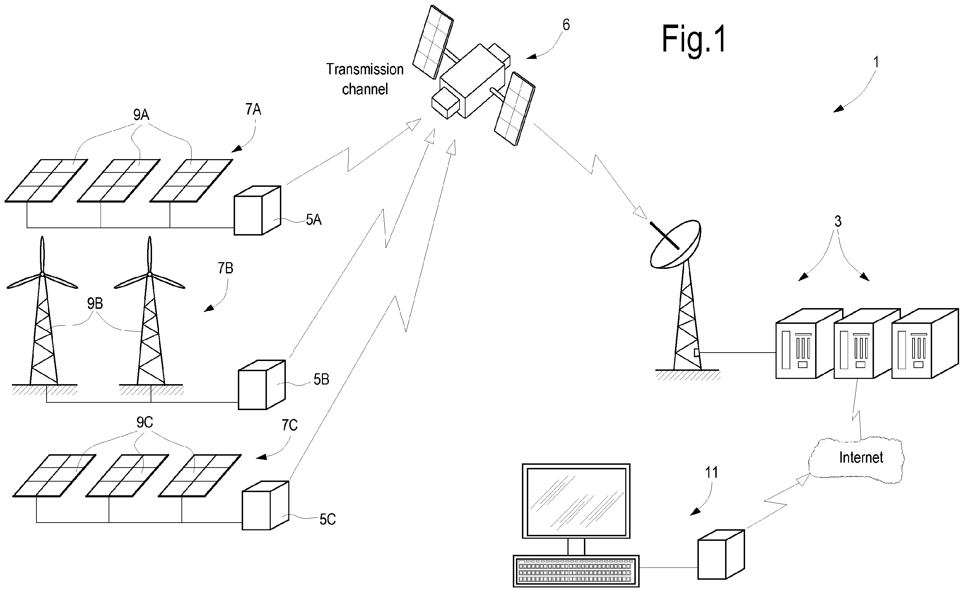

Fig.1 schematically illustrates a system 1 comprising a first device 3, for instance a server, and a plurality of second devices 5A, 5B, 5C, which will be herein also referred to as devices or "clients" 5. While only three such second devices are shown in the drawing, it shall be understood that in actual fact, a much larger number of such second devices will be present in the system. Additionally, in some embodiments more than one first device 3 can be foreseen. In some instances, one or more of the second devices can be in communication relationship with one or more of said first devices 3.

The first device 3 can be in data communication relationship with the second devices or clients 5A, 5B, 5C, through a generic transmission channel, which may include cellular or satellite connection, as schematically shown in Fig.1. Reference number 6 designates a transmission satellite, for instance.

Each second device 5A, 5B, 5C can include a programmable control unit, such as a computer, a micro-computer, a PLC or the like. Each second device 5A, 5B, 5C can be functionally coupled to one or more electric or electronic apparatuses 7A, 7B, 7C. By way of example only, apparatus 7A and 7C comprise a plurality of photovoltaic panels 9A, 9C and apparatus 7B comprises a plurality of wind turbines 9B.

The second devices 5A, 5B, 5C can be configured and arranged for collecting operating data and information concerning the apparatuses 7A, 7B, 7C, they are connected to. For instance, collected information can include the total energy produced, the instant power and mean power generated by the apparatus, control apparatus parameters, such as voltage, current, temperature, rotational speed (in case of wind turbines), and other data which can be useful for controlling the apparatus and retrieving information on the useful power produced thereby.

Authorized users can retrieve information from the first device 3, e.g. a server, through a suitable transmission channel, e.g. through the internet. In Fig. 1 one user only is shown, and labeled 11. It shall be understood, however, that several authorized users may gain access to the data collected by server 3. Each authorized user may have authorization to retrieve data from one or more selected second devices 5.

While in the exemplary embodiment of Fig.1 the second devices are arranged and configured for controlling renewable energy resources, such as photovoltaic panels and wind turbines, in other embodiments the second devices can be configured for different purposes. By way of illustrative, but not limiting example, the second devices can include vending machines. These may be installed in several locations, such as private and public premises (offices, factories, hospitals, railroad stations, underground stations, airports etc.) and may be in data communication with a server for collecting and transmitting data on the proper operation of the machines, amount and nature of the sold goods, need for maintenance or replenishment and the like. Other applications may include lighting devices, intrusion detection devices, video-camera installations for security purposes, and the like.

The data which can be transmitted from each second device 5A-5C to the first device 3 may be confidential and may require to be transmitted under secure transmission conditions. Data communication may also occur from the first device 3 to the second devices 5A-5C. Such data may include, but are not limited to, instructions to the second devices 5A-5C, upgrading software or firmware or the like.

Data exchange between each second device 5A-5C and the first device 3 may take place several times per day. As noted above, according to the current art, each time a secure communication channel shall be established between one of the second devices 5A-5C and the first device 3, a so-called SSL or TLS handshaking process shall be performed, during which a symmetric encryption key is provided by the first device 3 to the second device 5A-5C concerned. The symmetric encryption key is a session key which is used only for one communication session and is then discarded. As known to those skilled in the art, the SSL or TLS process is time consuming and heavy from the point of view of data traffic, since it involves the use of an asymmetric encryption key. As noted earlier in the present description, in some situations the data traffic required for handshaking and establishing of a secure transmission channel between the first device 3 and the second device 5A-5C concerned may well exceed the actual amount of useful data exchanged between the two devices. This is a concern especially where traffic is paid on a data-amount basis.

In order for data to be transmitted under secure communication conditions, avoiding however the need for a burdensome handshaking each time a transmission shall take place, according to embodiments disclosed herein a method is provided, wherein SSL or a similar secure transmission mode, which makes use of an asymmetric encryption key, is used as a preliminary phase to provide a set of symmetric encryption keys to the second device 5A-5C concerned. The symmetric encryption keys are then selectively used for a plurality of subsequent transmission sessions, which will not require an SSL handshake process.

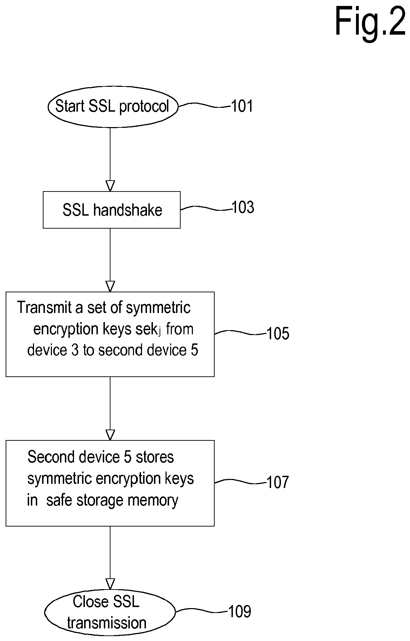

The flowchart of Fig. 2 illustrates the preliminary step of symmetric session key transmission under SSL or similar secure transmission conditions, from first device 3 to a selected one of the second devices 5A-5C. The transmission can be performed using a known SSL protocol or any other secure transmission protocol. The procedure is started at 101 and involves an SSL handshake step 103. Once the secure communication channel between first device 3 and the second device 5A-5C concerned has been established, the first device 3 transmits to the second device 5A-5C a set of m symmetric encryption keys SEKj (with j = 1 ... m), see step 105. These symmetric encryption keys are then safely stored by the device 5A-5C in a safety storage memory area of the device 5A-5C, which is not accessible from outside the device. See step 107. Finally, the SSL transmission is closed (step 109).

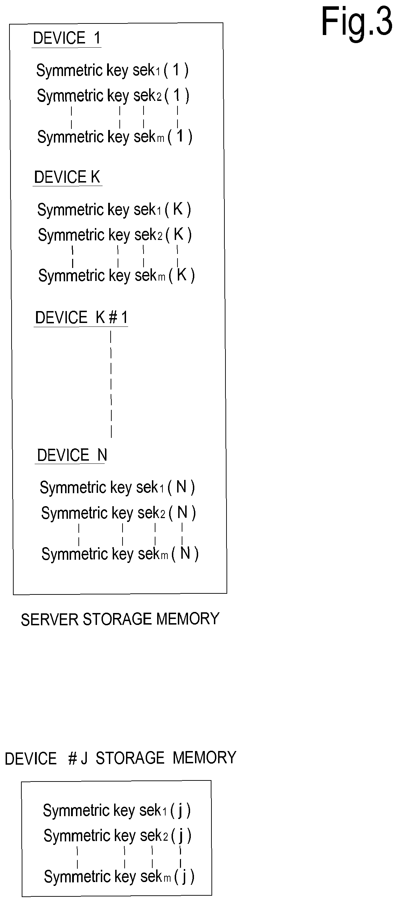

Sets of symmetric encryption keys can be provided by the first device 3 to each second device 5A-5C, all sets being securely stored in a protected memory area of the first device 3 and each set is securely stored in a protected memory area of each respective second device 5A-5C. Fig.3 illustrates schematically a server storage memory where the first device 3 stores the sets of keys for each second device 5A-5C, and a storage memory of a generic one (device #J) of said second devices 5A-5C.

Since each set of symmetric encryption keys is transmitted via an SSL or TLS protocol, transmission thereof is performed under high security standards. Storage of the transmitted symmetric encryption keys in a secure storage memory area, which is not accessible from outside the device, prevents third parties from gathering information on the symmetric encryption keys. According to the method disclosed herein, the symmetric encryption keys thus delivered to each second device 5A-5C will be used in subsequent data transmission sessions, without requiring an SSL handshake process to be performed each time a data transmission session shall start, such that the data traffic connected with the SSL (or similar) protocol can be dispensed with.

In the context of the present disclosure, SSL or TLS protocols are given just as possible examples of a transmission protocol which provides confidentiality and integrity of the data transmitted over the secure transmission channel, as well as identity of the parties (first device and second device) between which the transmission takes place, to prevent third malicious parties to capture or alter information, or else replace themselves to one of the parties involved in the communication.

According to some embodiments, each symmetric encryption key may include a session key proper and an expiry date or expiry time. The expiry time or date indicates till when the symmetric encryption key is valid. Once the time has expired, the symmetric encryption key cannot be used anymore. The expiry date can be days, weeks or months ahead the generation of the symmetric encryption key, depending on a trade-off between the wish of renewing the keys as often as possible, for improved security, and the cost of the data traffic required for updating the set of available symmetric encryption keys upon expiry (see below).

Each symmetric encryption key may have its own expiry date. Said date may be the same for all keys of the same set of symmetric encryption keys. In other embodiments, even within the same set of symmetric encryption keys, different expiry dates can be provided for different keys. In yet further embodiments, a single expiry date can be transmitted separately from each symmetric encryption key and can be attributed to the set as a whole.

The symmetric encryption keys may additionally each be characterized by a unique identification code ID, which can be a key serial number. For instance, if three symmetric encryption keys are provided ID=1, ID=2, ID=3 identify each single key.

For improved security, as will be explained later on, each symmetric encryption key may further comprise a random check key (RK), e.g. a random number which is not related to the session key proper. Not related means, in the present context, that the random check key is not generated (e.g. by applying a cryptographic hash function) from the session key itself, but has been assigned by the first device 3 to the session key in an entirely random manner.

An additional information associated with the symmetric encryption key can be the encryption method or algorithm used with said key, e.g. AES (Advanced Encryption Standard), 3DES (Triple Data Encryption Standard), or the like.

Once a generic second device 5 has received its own set of symmetric encryption keys SEKs, data package transmission can be performed as follows. In the example described below, transmission is through the internet, but other transmission means can be used, e.g. through cell phone, satellite communication, as well as other wireless as well as wired communication systems, such as Wi-Fi, Zigbee, Power line modulation (PLM) and others. Transmission can be through ADSL, even though maximum advantages can be achieved in those cases where the transmission technology involves high costs which are dependent upon the amount of data exchanged.

Once a new bunch or package of data has to be delivered by a second device 5 to the first device 3, a process can be performed, which can be divided into two main steps, namely: device and key validation, data transmission.

In the first step, the device 5 connects to the transmission channel, e.g. to the internet and starts an http connection with the first device 3, to perform a key and device validation process. One of the available symmetric encryption keys is selected by device 5 for encryption of the data package to be transmitted.

Once the http connection has been established, the second device 5 sends an HTTP message to the first device 3 to access a dedicated validation service, to check if the selected symmetric encryption key is still valid. This process is important to avoid waste of bandwidth. In fact, if the selected symmetric encryption key has expired or if it has been manually, automatically or randomly invalidated by the first device 3, and this notwithstanding said key is used for encrypting the data bunch, the transmitted encrypted data will not be processed by the first device 3, as the selected symmetric encryption key is invalid. The data traffic used (which has to be paid for by client 5) is wasted and the data encryption and transmission process must be repeated with consequent additional data traffic consumption. The preliminary step of checking the validity of the selected symmetric encryption key prevents such situation.

In the http header, on the user agent, the second device 5 can identify itself by sending some information in a format that the first device 3 can recognize. In the body of the http message information is provided by the second device 5 to the first device 3, which enable the first device 3 to identify which symmetric encryption key has been selected by device 5 among those symmetric encryption keys available to said device. Identification can be obtained e.g. through the ID identification code. Moreover, the data transmitted at this stage can be used to check if the selected symmetric encryption key is still valid.

For security reasons, the selected symmetric encryption key will not be introduced as such in the http message. In some embodiments, it could be envisaged to transmit an encrypted version of the selected symmetric encryption key from the second device 5 to the first device 3. For instance a digest or hash value of the selected symmetric encryption key can be used. However, this might be prone to security risks, since a malicious third party may intercept the transmission and try to retrieve the symmetric encryption key from the hash value.

In order to remove even this remote security risk, the random check key RK associated to the actual symmetric encryption key is used, rather than the key itself, in this preliminary step of the data transmission process. In order to further improve security, rather than using the plain random check key RK, this latter can be encrypted as such. As an additional security increasing measure, rather than encrypting the random check key RK alone, said random check key RK can be concatenated to a continuously variable information, e.g. a time stamp.

Thus, according to some embodiments, in the http body the following three pieces of information are transmitted in plain text:

- the unique identification code ID;
- a time stamp TS;
- a hash value, or digest, of a message formed by the time stamp TS and the random check key RK of the selected symmetric encryption key.

The hash or digest of the string formed by the time stamp TS concatenated to the random check key RK can be obtained by any suitable algorithm, such as MD5, SHA1 or any equivalent one.

For example, if the first selected symmetric encryption key is selected (i.e. the key having ID=1), the RK related to the selected symmetric encryption key is "mickey mouse" and the time stamp is "2014/04/08 16:11:02", then the MD5 will be calculated on the string "mickey mouse2014/04/08 16:11:02" and the digest will be obtained: "40eaee1f03453ca12549908b7b71f38e".

In this example, the message sent from the second device 5 to the first device 3 will be

```
GET/validation_service_uri HTTP1.1
User-Agent: MYDEVICE/SeveralOtherPossibleUsefulInformation
ID:1
TS: 2014/04/08 16:11:02
MD5: 40eaee1f03453ca12549908b7b71f38e
```

This message is 170 bytes long. HTTP1.1 is given just by way of example of a possible transmission protocol, other being available and suitable for the purpose of practicing the invention disclosed herein.

The first device 3 checks if the selected symmetric encryption key is still valid and if the selected symmetric encryption key is really what is supposed to be. The unique identification code ID is sufficient for the first device 3 to check if the selected symmetric encryption key is still valid. The digest of the random check key RK concatenated to the time stamp enables to check if the selected symmetric encryption key is really what is supposed to be.

Depending upon the result of this check, the first device 3 sends a valid-key message if the selected symmetric encryption key is still valid. Conversely, an invalid-key message is sent, if the selected symmetric encryption key is invalid. For example, a "200 OK" empty page is transmitted if the key is valid, or a "401 Unauthorized" empty page is transmitted if the key is not valid any more. The valid-key message is 19 bytes long, while the invalid-key message is 29 bytes long.

Typically the header is larger than the one shown above, to be compliant to the HTTP 1.1 protocol. For example, the header answer of the access to an example of portal home page is

```
HTTP/1.1 200 OK
Cache-Control:max -age=604800
Connection :keep -alive
Date:Thu, 09 Oct 2014 14:23:54 GMT
ETag:W/"122190-1407826478000"
Expires:Thu, 16 Oct 2014 14:23:54 GMT
Vary:Accept-Encoding
```

This header is 198 bytes long.

If an invalid-key message is received, the second device 5 can try a different symmetric encryption key from the available set. However, if all the symmetric encryption keys of a set have the same expiry date, this new attempt is doomed to fail and would only uselessly consume data traffic. Therefore, preferably if an invalid-key message is received by the second device 5, this latter will close the TCP connection and restart a new key acquisition process (see flow-chart in Fig. 2).

It can be assumed that the cost of the described validation process in terms of data traffic is around 500 bytes (0.5 kB). This process has to be performed every time the second device 5 has to initiate a communication process with the first device to transmit one or more data bunches or data packages to the first device 3. Assuming that the second device requires n=10 connections per day for a plurality (k) of operations, e.g. k=3 (such as data transmission, configuration and software upgrading, for instance), the amount of data transmission required for validation will be

$$N*k*0.5kB = 10*3*0.5kB = 15kB$$

instead of 150kB, which would be required if an SSL handshake process was used each time. The described method saves therefore around 135 kB per day, i.e. around 4MB per month.

Once the key validation process has been completed, the second device 5 selects all the data (or a portion thereof) to be transmitted, writes them in the desired format, then compresses the data, if needed, and encrypts the resulting data bunch or package with the selected symmetric encryption key. Finally, during the same connection, the second device 5 sends one or more encrypted bunches of data in the http body. Once all the data have successfully been transmitted, the connection can be closed.

How the data bunch is composed and/or compressed is not relevant to the present disclosure. Any data can be transmitted in the way disclosed herein. It shall also be noted that data compression may be useful in some instances to reduce data traffic, but is not mandatory and may add little advantage in some situations, e.g. when the data to be transmitted are already in a compressed form, such as .jpg image files.

If a data transmission service is requested by the second device 5 without the initial validation process, the server must answer with a "401 Unauthorized" message.

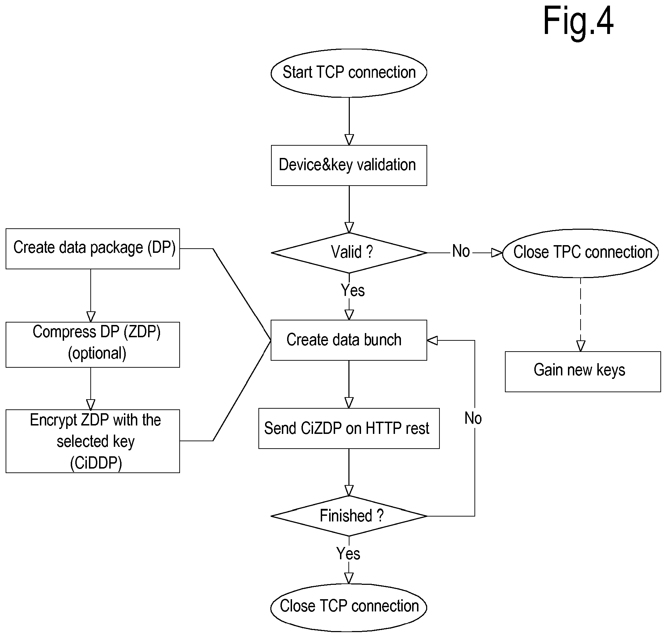

The above described data transmission process is summarized in the flow chart of Fig. 4.

The set of stored symmetric encryption keys can be used by the relevant second device 5 as long as they are valid (i.e. within the expiry date). Each second device 5 will typically start a session for key renewal, i.e. for receiving a new set of valid symmetric encryption keys when:

- an invalid-key message is received during a validation step;
- during a connection, if the further connection is expected after the expiring date of the keys

Even if not mandatory, each second device 5 should try to have always internally stored valid keys. Thus, an internal check routine can be foreseen, wherewith the second dcvicc 5 periodically checks if the stored symmetric encryption keys arc still valid and if this is not the case, the device can be configured to start a new acquisition process, requesting a new set of valid symmetric encryption keys (see Fig.2), such that an unexpected invalid-key message during the next data transmission process (Fig.4) can be avoided. This would further reduce data traffic.

## Claims

1. A method for secure data transmission between a first device (3) and a second device (5A, 5B, 5C); the method comprising the following steps:

   a) establishing a secure communication channel between the first device (3) and the second device (5A, 5B, 5C) through a handshaking process using a secure transmission protocol, which provides confidentiality and integrity of the data transmitted over the secure transmission channel, as well as identity of the first device and second device, between which the transmission takes place;
   b) once said secure communication channel has been established, transmitting a set of symmetric encryption keys (sekj(k)) from the first device (3) to the second device under secure transmission conditions using said secure transmission protocol through the secure communication channel, and storing the set of symmetric encryption keys (sekj) in respective protected storage memory areas at the fist device (3) and at the second device (5A, 5B, 5C);
   c) once the set of symmetric encryption keys (sekj(k)) have been transmitted from the first device (3) to the second device, closing the secure communication channel;

   and wherein, when the second device (5A, 5B, 5C) is required to transmit data to the first device (3), the following steps are performed:

   d) selecting one of said symmetric encryption keys (sekj(k)) at the second device (5A, 5B, 5C);
   e) generating a data bunch at the second device (5A, 5B, 5C) and encrypting the data bunch with the selected symmetric encryption key (sekj(k));
   f) establishing a communication channel between the second device and the first device without said handshaking process, and transmitting the encrypted data bunch from the second device (5A, 5B, 5C) to the first device (3);
   g) decrypting the encrypted data bunch at the first device (3) using the selected symmetric encryption key (sekj(k)).

2. The method of claim 1, comprising the step of attributing an expiry time or date to each symmetric encryption key (sekj(k)).

3. The method of claim 2, wherein the expiry time or date is provided individually for each symmetric encryption key (sekj(k)), or the expiry time or date is assigned globally to the set of symmetric encryption keys (sekj(k)).

4. The method of claim 2 or 3, wherein the step of selecting one of said symmetric encryption keys (sekj(k)) comprises the step of checking if the selected symmetric encryption key (sekj(k)) has expired and, if the selected symmetric encryption key has expired, discarding the selected symmetric encryption key (sekj(k)) and selecting another symmetric encryption key (sekj(k)).

5. The method of one or more of the preceding claims, wherein the second device (5A, 5B, 5C) transmits to the first device (3) information identifying the symmetric encryption key (sekj(k)) selected by the second device (5A, 5B, 5C).

6. The method of claim 5, wherein the information identifying the selected symmetric encryption key comprises one of: an encrypted version of the symmetric encryption key selected by the second device (5A, 5B, 5C); a random check key.

7. The method of one or more of the preceding claims, further comprising the step of checking if the selected symmetric encryption key (sekj(k)) is still valid before transmitting the encrypted data bunch.

8. The method of claim 7, wherein the step of checking if the selected symmetric encryption key (sekj(k)) is still valid comprises the following steps:

- transmitting, from the second device(5A, 5B, 5C) to the first device (3), information suitable for the first device (3) to identify the symmetric encryption key (sekj(k)) selected by the second device (5A, 5B, 5C);
- checking at the first device (3) if the selected symmetric encryption (sekj(k)) key is valid and transmitting from the first device (3) to the second device (5A, 5B, 5C)

i. a valid-key message if the selected symmetric encryption key (sekj(k)) is still valid, or
ii. an invalid-key message if the selected symmetric encryption key (sekj(k)) is invalid;

and wherein:

- if a valid-key message is received by the second device (5A, 5B, 5C), the step of transmitting the encrypted data bunch is performed;
- if an invalid-key message is received by the second device (5A, 5B, 5C), the step of transmitting the encrypted data bunch is not performed.

9. The method of claim 8, wherein, if an invalid-key message is received, a different symmetric encryption key (sekj(k)) is selected; or steps (a) and (b) are repeated and a new set of symmetric encryption keys (sekj(k)) is transmitted from the first device to the second device.

10. The method of one or more of the preceding claims, wherein each symmetric encryption key (sekj(k)) is combined with a unique key identification code.

11. The method of one or more of the preceding claims, wherein each symmetric encryption key (sekj(k)) is combined with a random check key, which is uncorrelated with respect to the symmetric encryption key (sekj(k)).

12. The method of claim 11 when depending at least upon claim 4, wherein the step of transmitting information identifying the selected symmetric encryption key (sekj(k)) comprises the step of applying a cryptographic hash function to at least the random check key associated to the selected symmetric encryption key (sekj(k)), said information containing the digest of the random check key.

13. The method of claim 12, wherein the step of transmitting information identifying the selected symmetric encryption key (sekj(k)) comprises the steps of:

- generating a stamp;
- applying the cryptographic hash function to the random check key and the stamp concatenated thereto;
- transmitting from the second device (5A, 5B, 5C) to the first device (3) said information consisting of at least the stamp and the digest of the random check key and the stamp concatenated thereto.

14. The method of claim 13, wherein the stamp is a time stamp.

15. The method of one or more of the preceding claims, wherein the first device (3) is a server and the second device (5A, 5B, 5C) is a client, in data communication with said server.

16. A system comprising at least a first device (3) and a plurality of second devices (5A, 5B, 5C), wherein the first device (3) and the second devices (5A, 5B, 5C) are configured and arranged for secure-communicating data with a method according to one or more of the preceding claims.

**Patentansprüche**

1. Verfahren zur sicheren Datenübertragung zwischen einer ersten Vorrichtung (3) und einer zweiten Vorrichtung (5A, 5B, 5C); wobei das Verfahren die folgenden Schritte umfasst:

a) Aufbauen eines sicheren Kommunikationskanals zwischen der ersten Vorrichtung (3) und der zweiten Vorrichtung (5A, 5B, 5C) durch ein Handshaking-Verfahren unter Verwendung eines sicheren Übertragungsprotokolls, das Vertraulichkeit und Integrität der Daten, die über den sicheren Übertragungskanal übertragen werden, sowie eine Identität der ersten Vorrichtung und zweiten Vorrichtung bereitstellt;

b) wenn der sichere Kommunikationskanal aufgebaut worden ist, Übertragen eines Satzes symmetrischer Verschlüsselungsschlüssel (sekj(k)) von der ersten Vorrichtung (3) zu der zweiten Vorrichtung unter sicheren Übertragungsbedingungen unter Verwendung des sicheren Übertragungsprotokolls durch den sicheren Kommunikationskanal und Speichern des Satzes symmetrischen Verschlüsselungsschlüssel (sekj) in jeweiligen geschützten Speicherplatzbereichen bei der ersten Vorrichtung (3) und der zweiten Vorrichtung (5A, 5B, 5C);

c) wenn der Satz symmetrischer Verschlüsselungsschlüssel (sekj(k)) von der ersten Vorrichtung (3) zu der zweiten Vorrichtung übertragen worden ist, Schließen des gesicherten Kommunikationskanals;

und wobei, wenn von der zweiten Vorrichtung (5A, 5B, 5C) Übertragung von Daten an die erste Vorrichtung (3) gefordert wird, die folgenden Schritte durchgeführt werden:

d) Auswählen eines der symmetrischen Verschlüsselungsschlüssel (sekj(k)) bei der zweiten Vorrichtung (5A, 5B, 5C);

e) Erzeugen eines Datenbündels bei der zweiten Vorrichtung (5A, 5B, 5C) und Verschlüsseln des Datenbündels mit dem ausgewählten symmetrischen Verschlüsselungsschlüssel (sekj(k));

f) Aufbauen eines Kommunikationskanals zwischen der zweiten Vorrichtung und der ersten Vorrichtung ohne das Handshaking-Verfahren und Übertragen des verschlüsselten Datenbündels von der zweiten Vorrichtung (5A, 5B, 5C) zu der ersten Vorrichtung (3) ;

g) Entschlüsseln des verschlüsselten Datenbündels bei der ersten Vorrichtung (3) unter Verwendung des ausgewählten symmetrischen Verschlüsselungsschlüssels (sekj(k)).

2. Verfahren gemäß Anspruch 1, das den Schritt des Zuordnens einer Verfallszeit oder eines Verfallsdatums zu jedem der symmetrischen Verschlüsselungsschlüssel (sekj(k)) umfasst.

3. Verfahren gemäß Anspruch 2, wobei die Verfallszeit oder das Verfallsdatum individuell für jeden symmetrischen Verschlüsselungsschlüssel (sekj(k)) bereitgestellt wird oder die Verfallszeit oder das Verfallsdatum global für den Satz symmetrischer Verschlüsselungsschlüssel (sekj(k)) zugeordnet wird.

4. Verfahren gemäß Anspruch 2 oder 3, wobei der Schritt des Auswählens eines der symmetrischen Verschlüsselungsschlüssel (sekj(k)) den Schritt der Überprüfung umfasst, ob der ausgewählte symmetrische Verschlüsselungsschlüssel (sekj(k)) verfallen ist, und, falls der ausgewählte symmetrische Verschlüsselungsschlüssel verfallen ist, Verwerfen des ausgewählten symmetrischen Verschlüsselungsschlüssels (sekj(k)) und Auswählen eines anderen symmetrischen Verschlüsselungsschlüssels (sekj(k)).

5. Verfahren gemäß einem oder mehreren der vorhergehenden Ansprüche, wobei die zweite Vorrichtung (5A, 5B, 5C) an die erste Vorrichtung (3) Informationen überträgt, die den symmetrischen Verschlüsselungsschlüssel (sekj(k)), der durch die zweite Vorrichtung (5A, 5B, 5C) ausgewählt wurde, identifizieren.

6. Verfahren gemäß Anspruch 5, wobei die Informationen, die den ausgewählten symmetrischen Verschlüsselungsschlüssel identifizieren, eines der folgenden umfassen: eine verschlüsselte Version des symmetrischen Verschlüsselungsschlüssels, der durch die zweite Vorrichtung (5A, 5B, 5C) ausgewählt wurde; einen zufälligen Überprüfungsschlüssel.

7. Verfahren gemäß einem oder mehreren der vorhergehenden Ansprüche, das weiter den Schritt des Überprüfens umfasst, ob der ausgewählte symmetrische Verschlüsselungsschlüssel (sekj(k)) noch gültig ist, bevor das verschlüsselte Datenbündel übertragen wird.

8. Verfahren gemäß Anspruch 7, wobei der Schritt des Überprüfens, ob der ausgewählte symmetrische Verschlüsselungsschlüssel (sekj(k)) noch gültig ist, die folgenden Schritte umfasst:

- Übertragen, von der zweiten Vorrichtung (5A, 5B, 5C) zu der ersten Vorrichtung (3), von Informationen, die für die erste Vorrichtung (3) geeignet sind, den symmetrischen Verschlüsselungsschlüssel (sekj(k)), der durch die zweite Vorrichtung (5A, 5B, 5C) ausgewählt wurde, zu identifizieren;

- Überprüfen bei der ersten Vorrichtung (3), ob der ausgewählte symmetrische Verschlüsselungsschlüssel (sekj(k)) gültig ist, und Übertragen von der ersten Vorrichtung (3) zu der zweiten Vorrichtung (5A, 5B, 5C)

    i. einer Gültige-Schlüssel-Nachricht, wenn der ausgewählte symmetrische Verschlüsselungsschlüssel (sekj(k)) noch gültig ist, oder

    ii. einer Ungültige-Schlüssel-Nachricht, wenn der ausgewählte symmetrische Verschlüsselungsschlüssel (sekj(k)) ungültig ist;

und wobei:

- wenn eine Gültige-Schlüssel-Nachricht durch die zweite Vorrichtung (5A, 5B, 5C) empfangen wird, der Schritt der Übertragung des verschlüsselten Datenbündels ausgeführt wird;

- wenn eine Ungültige-Schlüssel-Nachricht durch die zweite Vorrichtung (5A, 5B, 5C) empfangen wird, der Schritt der Übertragung des verschlüsselten Datenbündels nicht ausgeführt wird.

9. Verfahren gemäß Anspruch 8, wobei, wenn eine Ungültige-Schlüssel-Nachricht empfangen wird, ein anderer symmetrischer Verschlüsselungsschlüssel (sekj(k)) ausgewählt wird; oder die Schritte (a) und (b) wiederholt werden und ein neuer Satz symmetrischer Verschlüsselungsschlüssel (sekj(k)) von der ersten Vorrichtung an die zweite Vorrichtung übertragen wird.

10. Verfahren gemäß einem oder mehreren der vorhergehenden Ansprüche, wobei jeder symmetrische Verschlüsselungsschlüssel (sekj(k)) mit einem einzigartigen Schlüsselidentifikationscode kombiniert wird.

11. Verfahren gemäß einem oder mehreren der vorhergehenden Ansprüche, wobei jeder symmetrische Verschlüsselungsschlüssel (sekj(k)) mit einem zufälligen Überprüfungsschlüssel kombiniert wird, der hinsichtlich des symmetrischen Verschlüsselungsschlüssels (sekj(k)) unkorreliert ist.

12. Verfahren gemäß Anspruch 11, wenn mindestens von Anspruch 4 abhängig, wobei der Schritt der Übertragung von Informationen, welche den ausgewählten symmetrischen Verschlüsselungsschlüssel (sekj(k)) identifizieren, den Schritt der Anwendung einer kryptographischen Hash-Funktion auf mindestens den zufälligen Überprüfungsschlüssel, der mit dem ausgewählten symmetrischen Verschlüsselungsschlüssel (sekj(k)) verknüpft ist, umfasst, wobei die Informationen den Hash-Wert des zufälligen Überprüfungsschlüssels enthalten.

13. Verfahren gemäß Anspruch 12, wobei der Schritt der Übertragung von Informationen, welche den ausgewählten symmetrischen Verschlüsselungsschlüssel (sekj(k)) identifizieren, die Schritte umfasst:

    - Erzeugen eines Stempels;
    - Anwenden der kryptographischen Hash-Funktion auf den zufälligen Überprüfungsschlüssel und den Stempel, der damit verknüpft ist;
    - Übertragung von der zweiten Vorrichtung (5A, 5B, 5C) zu der ersten Vorrichtung (3) der Informationen, die mindestens aus dem Stempel und dem Hash-Wert des zufälligen Überprüfungsschlüssels und dem damit verknüpften Stempel bestehen.

14. Verfahren gemäß Anspruch 13, wobei der Stempel ein Zeitstempel ist.

15. Verfahren gemäß einem oder mehreren der vorhergehenden Ansprüche, wobei die erste Vorrichtung (3) ein Server ist und die zweite Vorrichtung (5A, 5B, 5C) ein Client, in Datenkommunikation mit dem Server, ist.

16. System, das mindestens eine erste Vorrichtung (3) und einer Anzahl zweiter Vorrichtungen (5A, 5B, 5C) umfasst, wobei die erste Vorrichtung (3) und die zweiten Vorrichtungen (5A, 5B, 5C) für sichere Datenkommunikation mit einem Verfahren gemäß einem oder mehreren der vorhergehenden Ansprüche eingerichtet und aufgebaut sind.

**Revendications**

1. Un procédé de transmission de données sécurisée entre un premier dispositif (3) et un deuxième dispositif (5A, 5B, 5C), ce procédé comprenant les étapes suivantes consistant à :

   a) établir un canal de communication sécurisé entre le premier dispositif (3) et le deuxième dispositif (5A, 5B, 5C) au moyen d'un procédé d'établissement de liaison utilisant un protocole de transmission sécurisé, lequel fournit une confidentialité et une intégrité des données transmises à travers le canal de transmission sécurisé, ainsi que l'identité du premier dispositif et du deuxième dispositif entre lesquels la transmission a lieu ;
   b) une fois que ledit canal de communication sécurisé a été établi, transmettre un jeu de clés de cryptage symétriques (sekj(k)) du premier dispositif (3) au deuxième dispositif dans des conditions de transmission sécurisée utilisant ledit protocole de transmission sécurisé à travers le canal de communication sécurisé, et stocker le jeu de clés de cryptage symétriques (skej) dans des zones de mémoire de stockage protégées respectives du premier dispositif (3) et au niveau du deuxième dispositif (5A, 5B, 5C) ;
   c) une fois que le jeu de clés de cryptage symétriques (sekj(k)) a été transmis du premier dispositif (3) au deuxième dispositif, fermer le canal de communication sécurisé ;

   et dans lequel, lorsqu'il est requis au deuxième dispositif (5A, 5B, 5C) de transmettre des données au premier dispositif (3), sont exécutées les étapes suivantes consistant à :

   d) sélectionner l'une desdites clés de cryptage symétriques (sekj(k)) au niveau du deuxième dispositif (5A, 5B, 5C) ;
   e) générer un ensemble de données au niveau du deuxième dispositif (5A, 5B, 5C) et cryptage de l'ensemble de données avec la clé de cryptage symétrique sélectionnée (sekj(k)) ;
   f) établir un canal de communication entre le deuxième dispositif et le premier dispositif sans ledit procédé d'établissement de liaison, et transmettre l'ensemble de données cryptées du deuxième dispositif (5A, 5B, 5C) au premier dispositif (3) ;
   g) décrypter l'ensemble de données cryptées au niveau du premier dispositif (3) en utilisant la clé de cryptage symétrique sélectionnée (sekj(k)).

2. Le procédé selon la revendication 1, comprenant l'étape d'attribution d'une heure ou date d'expiration à chaque clé de cryptage symétrique (sekj(k)).

3. Le procédé selon la revendication 2, dans lequel l'heure ou la date d'expiration est fournie individuellement pour chaque clé de cryptage symétrique (sekj(k)), ou l'heure ou la date d'expiration est attribuée globalement au jet de clés de cryptage symétriques (sekj(k)).

4. Le procédé selon la revendication 2 ou 3, dans lequel l'étape de sélection de l'une desdites clés de cryptage symétriques (sekj(k)) comprend l'étape de vérification si la clé de cryptage symétrique sélectionnée (sekj(k)) a expiré et, si la clé de cryptage symétrique sélectionnée a expiré, effacer la clé de cryptage symétrique sélectionnée (sekj(k)) et sélectionner une autre clé de cryptage symétrique (sekj(k)).

5. Le procédé selon l'une ou plusieurs des revendications précédentes, dans lequel le deuxième dispositif (5A, 5B, 5C) transmet au premier dispositif (3) des informations identifiant la clé de cryptage symétrique (sekj(k)) sélectionnée par le deuxième dispositif (5A, 5B, 5C).

6. Le procédé selon la revendication 5, dans lequel l'information identifiant la clé de cryptage symétrique sélectionnée comprend l'un des éléments suivants : une version cryptée de la clé de cryptage symétrique sélectionnée par le deuxième dispositif (5A, 5B, 5C) ou une clé de vérification aléatoire.

7. Le procédé selon l'une ou plusieurs des revendications précédentes, comprenant en outre l'étape de vérification si la clé de cryptage symétrique sélectionnée (sekj(k)) est encore valable avant de transmettre l'ensemble de données cryptées.

8. Le procédé selon la revendication 7, dans lequel l'étape de vérification si la clé de cryptage sélectionnée (sekj(k)) est encore valable comprend les étapes suivantes consistant à :

   - transmettre, du deuxième dispositif (5A, 5B, 5C) au premier dispositif (3), des informations appropriées pour que le premier dispositif (3) identifie la clé de cryptage symétrique (sekj(k)) sélectionnée par le deuxième dispositif (5A, 5B, 5C) ;

- vérifier au niveau du premier dispositif (3) si la clé de cryptage symétrique sélectionnée (sekj(j)) est valable et transmettre du premier dispositif (3) au deuxième dispositif (5A, 5B, 5C)

    i. un message de validité de clé si la clé de cryptage symétrique sélectionnée (sekj(k)) est encore valable, ou
    ii. un message d'invalidité de clé si la clé de cryptage symétrique sélectionnée (sekj(k)) n'est pas valable,

et dans lequel :

- si un message de validité de clé est reçu par le deuxième dispositif (5A, 5B, 5C), l'étape de transmission de l'ensemble de données cryptées est exécutée ;
- si un message d'invalidité de clé est reçu par le deuxième dispositif (5A, 5B, 5C), l'étape de transmission de l'ensemble de données cryptées n'est pas exécutée.

9. Le procédé selon la revendication 8, dans lequel, si un message d'invalidité de clé est reçu, une clé de cryptage symétrique différente (sekj(k)) est sélectionnée ; ou les étapes (a) et (b) sont répétées et un nouveau jeu de clés de cryptage symétriques (sekj(k)) est transmis du premier dispositif au deuxième dispositif.

10. Le procédé selon l'une ou plusieurs des revendications précédentes, dans lequel chaque clé de cryptage symétrique (sekj(k)) est combinée avec un code d'identification de clé unique.

11. Le procédé selon l'une ou plusieurs des revendications précédentes, dans lequel chaque clé de cryptage symétrique (sekj(k)) est combinée avec une clé de vérification aléatoire, laquelle n'a aucune corrélation avec la clé de cryptage symétrique (sekj(k)).

12. Le procédé selon la revendication 11 lorsque celle-ci est dépendante au moins de la revendication 4, dans lequel l'étape de transmission d'informations identifiant la clé de cryptage symétrique sélectionnée (sekj(k)) comprend l'étape d'application une fonction de hachage cryptographique au moins à la clé de vérification aléatoire associée à la clé de cryptage symétrique sélectionnée (sekj(k)), lesdites informations contenant le condensé de la clé de vérification aléatoire.

13. Le procédé selon la revendication 12, dans lequel l'étape de transmission d'informations identifiant la clé de cryptage symétrique sélectionnée (sekj(k)) comprend les étapes consistant à :

- générer un tampon ;
- appliquer la fonction de hachage cryptographique à la clé de vérification aléatoire et au tampon concaténé à celle-ci,
- transmettre du deuxième dispositif (5A, 5B, 5C) au premier dispositif (3) lesdites informations constituées au moins du tampon et du condensé de la clé de vérification aléatoire et de la clé concaténée à celle-ci.

14. Le procédé selon la revendication 13, dans lequel le tampon est un horodatage.

15. Le procédé selon l'une ou plusieurs des revendications précédentes, dans lequel le premier dispositif (3) est un serveur et le deuxième dispositif (5A, 5B, 5C) est un client, en communication de données avec ledit serveur.

16. Un système comprenant au moins un premier dispositif (3) et une pluralité de deuxièmes dispositifs (5A, 5B, 5C), dans lequel le premier dispositif (3) et les deuxièmes dispositifs (5A, 5B, 5C) sont configurés et agencés pour communiquer des données de manière sécurisée avec le procédé selon l'une ou plusieurs des revendications précédentes.

Fig.1

EP 3 299 988 B1

# Fig.2

Start SSL protocol —— 101

SSL handshake —— 103

Transmit a set of symmetric
encryption keys $sek_j$ from
device 3 to second device 5 —— 105

Second device 5 stores
symmetric encryption keys
in safe storage memory —— 107

Close SSL
transmission —— 109

# Fig.3

DEVICE 1

Symmetric key $sek_1(1)$
Symmetric key $sek_2(1)$

Symmetric key $sek_m(1)$

DEVICE K

Symmetric key $sek_1(K)$
Symmetric key $sek_2(K)$

Symmetric key $sek_m(K)$

DEVICE K # 1

DEVICE N

Symmetric key $sek_1(N)$
Symmetric key $sek_2(N)$

Symmetric key $sek_m(N)$

SERVER STORAGE MEMORY

DEVICE # J STORAGE MEMORY

Symmetric key $sek_1(j)$
Symmetric key $sek_2(j)$

Symmetric key $sek_m(j)$

# Fig.4

Start TCP connection

↓

Device&key validation

↓

Valid ? —No→ Close TPC connection

Yes

Create data package (DP)

↓

Compress DP (ZDP) (optional)

↓

Encrypt ZDP with the selected key (CiDDP)

Create data bunch

↓

Send CiZDP on HTTP rest

↓

Finished ? —No→

Yes

↓

Close TCP connection

Gain new keys

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 201370219189 A